# EUROPEAN PATENT APPLICATION

(11) **EP 3 566 855 A1**
(43) Date of publication of application: **13.11.2019**
(21) Application number: 18171217.5
(22) Date of filing: 08.05.2018
(51) Int. Cl.: B29C 64/386, G06K 19/06, H04W 12/06, B29C 64/393, B29C 64/118, B33Y 10/00, B33Y 30/00, B33Y 50/00, B33Y 50/02

(54) **PRINTER UNIT, METHODS AND CODE UNIT FOR 3D-PRINTED OBJECTS**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

A printer unit (100) for a 3D-printing apparatus, comprising a nozzle (110) arranged to deposit a printing material from the printer unit, and a control unit (120) coupled to the nozzle and configured to control the movement of the nozzle. The control unit is configured to move the nozzle along a first axis, A, for deposition of a first string (130) of printing material along the first axis, to move the nozzle along a second axis, B, arranged at an angle, α, with respect to the first axis, for deposition of a plurality of second strings (140) of printing material extending from the first axis along the second axis, and to control the length, L, of each second string of the plurality of second strings, wherein the pattern of the plurality of second strings is associated with information data.

## Description

### FIELD OF THE INVENTION

The present invention generally relates to the field of 3D printing. More specifically, the present invention relates to a printer unit for a 3D printing apparatus, and a printing method.

### BACKGROUND OF THE INVENTION

Additive manufacturing, sometimes also referred to as 3D printing, refers to processes used to synthesize a three-dimensional object. 3D printing is rapidly gaining popularity because of its ability to perform rapid prototyping without the need for assembly or molding techniques to form the desired article.

By using a 3D-printing apparatus, an article or object may be built in three dimensions in a number of printing steps that often are controlled by a computer model. For example, a sliced 3D model of the object maybe provided in which each slice is recreated by the 3D-printing apparatus in a discrete printing step.

One of the most widely used 3D-printing processes is Fused Filament Fabrication (FFF). FFF printers often use a thermoplastic filament which in its molten state is ejected from a nozzle of the printer. The material is then placed layer by layer, to create a three-dimensional object. FFF printers are relatively fast and can be used for printing objects of various kinds, even those having relatively complex structures.

In the prior art, it is often desirable to tag products, e.g. by a bar code, a QR code, etc., to allow traceability. Object tagging systems have wide-ranging uses in logistics, point of sale, robot guidance, augmented reality, and many other applications that link physical objects with computing systems.

It will be appreciated that the ability to tag or mark objects is also of interest in the 3D-printing technology. However, adding additional tags or markers to 3D-printed objects or products may result in additional time and material required, which consequently may lead to an inefficiency regarding cost and/or time of the process.

Hence, alternative solutions are of interest, which are able to provide a more time- and/or cost-efficient manner for tagging or marking a 3D-printed object.

### SUMMARY OF THE INVENTION

It is an object of the present invention to mitigate the above problems and to provide a printer unit and a method which are able to provide a time- and/or cost-efficient manner for tagging or marking a 3D-printed object.

This and other objects are achieved by providing a printer unit and a method having the features in the independent claims. Preferred embodiments are defined in the dependent claims.

Hence, according to a first aspect of the present invention, there is provided a printer unit for a 3D-printing apparatus. The printer unit comprises a nozzle arranged to deposit a printing material from the printer unit, and a control unit coupled to the nozzle and configured to control the movement of the nozzle. The control unit is configured to move the nozzle along a first axis, A, for deposition of a first string of printing material along the first axis. The control unit is further configured to move the nozzle along a second axis, B, arranged at an angle, α, with respect to the first axis, for deposition of a plurality of second strings of printing material extending from the first axis along the second axis. The control unit is further configured to control the length of each second string of the plurality of second strings, wherein the pattern of the plurality of second strings is associated with information data.

According to a second aspect of the present invention, there is provided a method for controlling a printer unit of a 3D-printing apparatus, wherein the printer unit comprises a nozzle arranged to deposit a printing material from the printer unit. The method comprises the step of moving the nozzle along a first axis, A, for deposition of a first string of printing material along the first axis. The method further comprises the step of moving the nozzle along a second axis, B, arranged at an angle, α, with respect to the first axis, for deposition of a plurality of second strings of printing material extending from the first axis along the second axis. The method further comprises the step of controlling the length of each second string of the plurality of second strings, wherein the pattern of the plurality of second strings is associated with information data.

According to a third aspect of the present invention, there is provided a code unit obtainable by the method according to the second aspect of the present invention. The code unit comprises a first string of printing material extending along a first axis, A. The code unit further comprises a plurality of second strings of printing material formed in one piece with the first string. Each of the second strings extends with an individual length, Lᵢ, from the first string along a second axis, B, arranged at an angle, α, with respect to the first axis, wherein the pattern of the plurality of second strings is associated with information data.

According to a fourth aspect of the present invention, there is provided a method for decoding a code unit according to the third aspect of the present invention. The method comprises the steps of mapping the pattern of the plurality of second strings to a histogram, and retrieving the information data from the code unit based on characteristics of the histogram.

According to a fifth aspect of the present invention, there is provided a computer program comprising computer readable code for causing a computer to carry out the steps of the method according to the second or fourth aspect of the present invention when the computer program is carried out on the computer.

Thus, the present invention is based on the idea of providing a printer unit or a method configured to create a code unit, as well as the code unit itself, wherein the code unit of printing material provided by the printer unit is associated with information data. The code unit of the 3D-printed object may be read or scanned (e.g. by machine) such that the 3D-printed product becomes traceable. As a result, the present invention provides a time- and/or cost-efficient manner for tagging or marking a 3D-printed object.

Typically for 3D-printing, a 'flush line' is added to the beginning of a 3D-printed product to extrude excess material which may have imperfections, before starting the main 3D-printing. This excess material normally stays attached to the 3D-printed product until it is cut off before delivery. By providing a code unit to this 3D-printed product according to the present invention, the product may be traceable until the 'flush line' is removed at the end of the production process, for example when a traceable barcode has been added. The present invention is hereby advantageous in that it provides a convenient tagging or marking of the 3D-printed product.

The present invention is further advantageous in that the pattern of the code unit is easily and conveniently read or scanned, either manually or automatically, to ensure the identity of the 3D-printed product.

It will be appreciated that the mentioned advantages of the printer unit and the code unit of the present invention also hold for the methods according to the present invention.

The printer unit of the present invention comprises a nozzle arranged to deposit a printing material from the printer unit. By the term "printing material", it is usually meant a plastic, provided as a filament. By "deposit", it is hereby meant that the nozzle is configured to eject, provide or extrude (a filament of a) printing material supplied to the nozzle, whereby the depositing of the nozzle is commonly made in a vertical direction and on an underlying material.

The printer unit further comprises a control unit which is coupled to the nozzle and configured to control the movement of the nozzle. By "control unit", it is here meant substantially any unit, device, or the like, which is coupled and/or connected to the nozzle, either by a wired or wireless connection, for controlling the nozzle. The control unit is configured to move the nozzle along a first axis, A, for deposition of a first string of printing material along the first axis. The control unit is further configured to move the nozzle along a second axis, B, arranged at an angle, α, with respect to the first axis, for deposition of a plurality of second strings of printing material extending from the first axis along the second axis. In other words, the control unit may be configured to deposit a first (main, reference) string of printing material, and a plurality of second strings, wherein the second strings extend from this first string. The control unit is further configured to control the length of each second string of the plurality of second strings, wherein the pattern of the plurality of second strings is associated with information data. Hence, the plurality of second strings of printing material may constitute a pattern, e.g. wherein the length of each second string and/or the number of second strings of the plurality of second strings constitutes at part of, or the complete pattern. The pattern is associated with information data, such that the pattern can be read, scanned and/or analyzed to obtain information data associated with the (specific) pattern of the printing material.

According to an embodiment of the present invention, the control unit is further configured to move the nozzle along the second axis on either side of the first axis, for deposition of the plurality of second strings on either side of the first string. In other words, the control unit may be configured to move the nozzle along the second axis on both sides of the first axis. In this way, the pattern of printing material deposited by the nozzle of the printer unit may have a fish-bone structure. The control unit may, as an alternative, be configured to move the nozzle along the second axis on one, and only one, side of the first axis. In this way, the pattern of printing material deposited by the nozzle of the printer unit may resemble that of a comb. Analogously with the preceding embodiments and according to an embodiment of the method of the second aspect of the present invention, the method may comprise the step of moving the nozzle along the second axis on either side of the first axis, for deposition of the plurality of second strings on either side of the first string. Alternatively, the method may comprise the step of moving the nozzle along the second axis on one, and only one, side of the first axis. The present embodiment (or embodiments) is (are) advantageous in that the control unit may move the nozzle back and forth from the first string of deposited printing material in an easy and convenient manner to create second strings of printing material.

According to one or more embodiments of the present invention, the angle α may be 45-90°, preferably 60-90°, and most preferred 90°. Hence, the control unit of the printer unit of the first aspect of the present invention and/or the method of the second aspect of the present invention may comprise moving the nozzle along a second axis, B, arranged at the exemplified angle α with respect to the first axis, for deposition of a plurality of second strings of printing material extending from the first axis along the second axis. For example, in case the angle α is 45-90°, such as 60-90°, the resulting second strings extend from the first string in an inclined manner, such that the pattern of printing material deposited by the nozzle of the printer unit may resemble a fish-bone structure. Alternatively, in case the angle α is 90°, the resulting second strings extend perpendicular from the first string, and the pattern of printing material deposited by the nozzle of the printer unit may have a comb structure. The present embodiment(s) is (are) advantageous in that a possible inclination of one or more of the second strings may be associated with information data of the pattern of printing material. In case the angle α is 90°, the present embodiment(s) is (are) advantageous in that the deposition of printing material may be performed in an even more convenient manner by moving the nozzle of the printer unit back and forth perpendicularly from the first string of printing material.

According to one or more embodiments of the present invention, the length of each second string is associated with information data. Hence, the pattern of the second strings of printing material as provided by the nozzle of the printer unit of the first aspect of the present invention, the method of the second aspect of the present invention, and/or the code unit of the third aspect of the present invention, may be characterized by the lengths of the individual second strings of printing material. For example, each second string may encode an arbitrary number of values (e.g. 3 values of 0, 1, 2) on one or both sides of the first string. The present embodiment is advantageous in that the information data associated with the pattern of the second strings may be easily and conveniently read and/or deduced.

According to one or more embodiments of the present invention, the information data at least comprises a first header, intermediate data, and a second header. Hence, the pattern of the second strings of printing material is associated with information data which comprises a first header, intermediate data, and a second header. For example, the first header, the intermediate data and the second data may comprise an arbitrary number of second strings, e.g. 3 second strings of the first header, 7 second strings of the intermediate data, and 3 second strings of the second header.

According to an embodiment of the present invention, there is provided a 3D-printed object comprising at least one code unit according to one or more of the previous embodiments. The present embodiment is advantageous in that the pattern of the code unit of the 3D-printed object is easily and conveniently read or scanned, either manually or automatically, to ensure the identity of the 3D-printed product. It will be appreciated that the code unit may form an integral part of the 3D-printed product, or alternatively, be provided as a disposable part or portion of the 3D-printed product.

According to an embodiment of the method of the fourth aspect of the present invention, the step of retrieving the information data further comprises scanning the code unit of the third aspect of the present invention in a direction of the code unit from either one of a direction from the first header to the second header of the code unit, or from the second header to the first header of the code unit. In other words, the method of scanning the code unit may be performed either in a forward direction (from the first header to the second header), or in a backward direction (from the second header to the first header). The present embodiment is advantageous in its versatility, as the code unit may be scanned in either direction, e.g. reversed, flipped, etc. Consequently, the code unit of the present embodiment may save time and/or ensure a more efficient scanning, regardless of being performed automatically or manually.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1a shows a schematic view of a portion of a printer unit for a 3D-printing apparatus,
Fig. 1b shows a schematic view of the operation of a control unit of the printer unit,
Figs. 2a-c show schematic views of a code unit according to exemplifying embodiments of the present invention, and
Fig. 3 is a schematic view of a method according to an exemplifying embodiment of the present invention.

### DETAILED DESCRIPTION

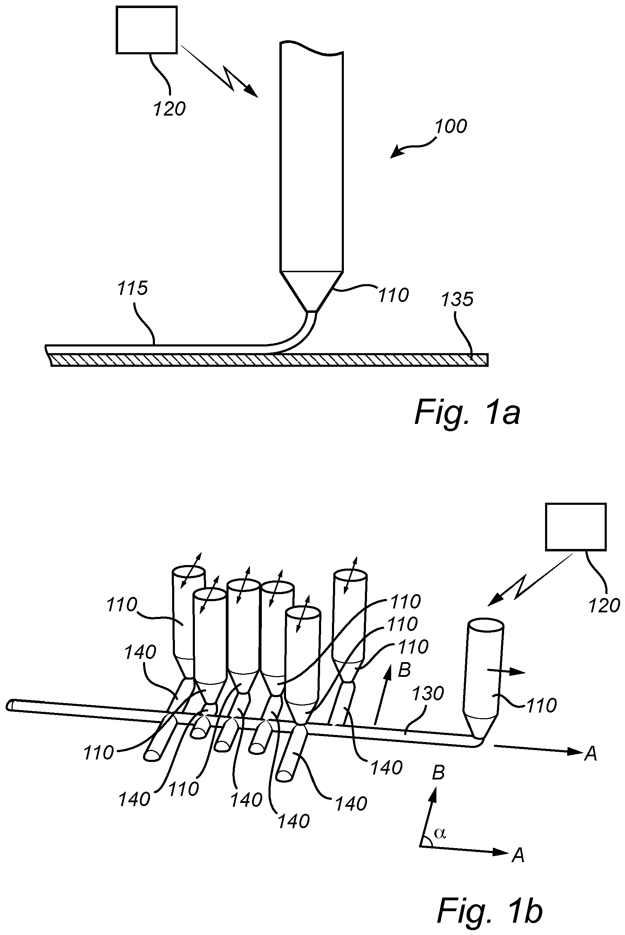

Fig. 1a shows a schematic view of a portion of a printer unit 100 for a 3D-printing apparatus. It will be appreciated that the printer unit 100 may comprise additional elements, features, etc. However, these are omitted in Fig. 1 for an increased understanding. The printer unit 100 comprises a nozzle 110 which is arranged to deposit printing material supplied to the nozzle 110. In this example, the nozzle 110 is arranged to deposit printing material in the form of a filament 115 in a vertical direction and on an underlying material 135. The underlying material 135 is exemplified as a build-plate, but may alternatively constitute at least one layer of (previously deposited) printing material. The printing material is extruded from the bottom portion of the tapered nozzle 110. The printer unit 100 comprises a schematically indicated control unit 120 which is coupled to the nozzle 110, either by wire or wirelessly, and which is configured to control the movement of the nozzle 110. It will be appreciated that the control unit 120 alternatively may be attached to the nozzle 110, such that it forms an integral part of the printer unit 100. It will be appreciated that the purpose of Fig. 1a is to provide a general description of the functionality of the printer unit, and that the operation of the control unit 120 applied to the nozzle 110 of the printer unit is further described in Fig. 1b.

Fig. 1b shows a schematic view of the operation of the control unit 120 applied to the nozzle 110 of the printer unit according to Fig. 1a. It will be appreciated that the purpose of Fig. 1b is also to exemplify the method for controlling a printer unit of a 3D-printing apparatus according to the second aspect of the present invention. The control unit 120 is configured to move the nozzle 110 along a first axis A for deposition of a first string 130 of printing material along the first axis A. The first string 130 of printing material may hereby constitute a main axis or reference axis of printing material. The control unit 120 is further configured to move the nozzle 110 along a second axis B, wherein the second axis B may be arranged at an angle α with respect to the first axis A. The control unit 120 is further configured to deposit a plurality of second strings 140 of printing material, such that the plurality of second strings 140 extend along the second axis B from the first axis A. In this example, the angle α is approximately 90°. Hence, the axis A and B are (substantially) perpendicular, and the resulting plurality of second strings 140 extend perpendicular from the first string 130. Here, the plurality of second strings 140 is deposited by the nozzle 110 on either side of the first string 130. Alternatively, the plurality of second strings 140 may be deposited by the nozzle 110 on one side of the first string 130, such that the pattern of the plurality of second strings 140 may resemble that of a comb. The control unit 120 is further configured to control the length of each second string of the plurality of second strings 140. In this manner, the plurality of second strings 140 forms a pattern which may be associated with, inter alia, the length of each second string of the plurality of second strings 140, the number of second strings 140, etc. This pattern, in its turn, is associated with information data, wherein the information data e.g. may comprise an identification.

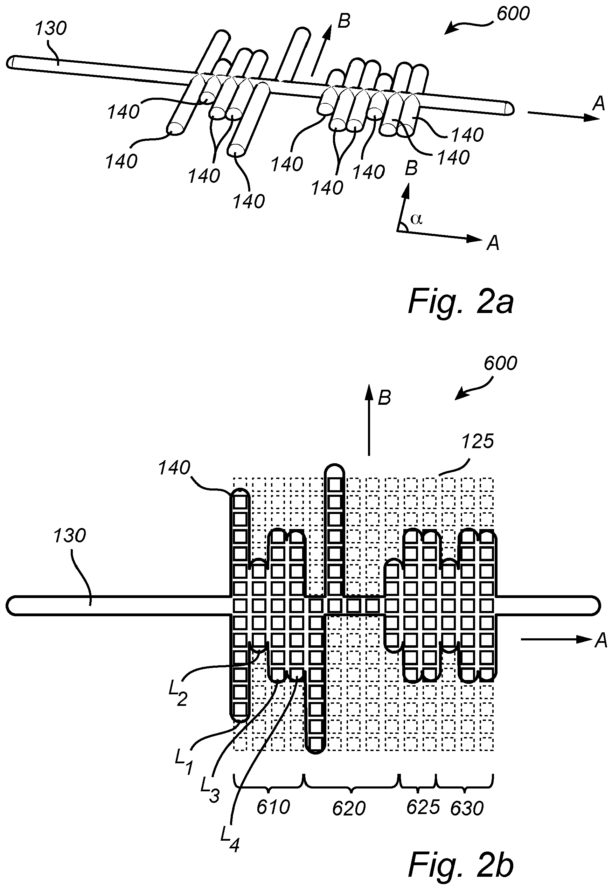

Fig. 2a shows a code unit 600 according to the third aspect of the present invention, which furthermore is obtainable by the operation of the printer unit according to the first aspect of the present invention and/or the method according to the second aspect of the present invention. The code unit 600 comprises a first string 130 of printing material extending along a first axis A. The first string 130 of printing material may hereby constitute a main axis or reference axis of printing material. The code unit 600 further comprises a plurality of second strings 140 of printing material which are formed in one piece with the first string. It will be appreciated that the plurality of second strings 140 may be provided on one side of the first string 130 only (not shown), or alternatively, as shown in Fig. 2a, arranged on both sides of the first string 130. The pattern of the code unit 600, comprising a plurality of second strings 140 which extend in parallel and/or with a phase shift of 180° with respect to each other, is associated with information data. For example, the pattern may be associated with the number of the second strings 140, the respective length of each second string 140 on one or both sides of the first string 130, etc. In this example, the code unit 600 comprises 14 second strings 140 of printing material, but it should be noted that the number of second strings 140 may be set arbitrarily. The second strings 140 of printing material extend from the first axis A along a second axis, B, arranged at an angle, α, with respect to the first axis. In this example, α = 90°, i.e. the second strings 140 extend perpendicular to the first string 130.

Fig. 2b shows the code unit 600 as exemplified in Fig. 2a, wherein a grid of squares 125 has been added to the figure for an increased understanding of the pattern of the code unit 600. In Fig. 2b, each of the second strings 140 of the code unit 600 extends with an individual length Lᵢ from the first string 130. Hence, the length Lᵢ of the second strings 140 may be predetermined or set to a specific, individual length. For example, the lengths Lᵢ of the 14 second strings 140 of the code unit 600 in Fig. 1a may be L₁, L₂, ..., L₁₄. The plurality of second strings 140 of the code unit 600, wherein each string 140 has an individual length Lᵢ, form a pattern which is associated with information data. For example, the number of second strings 140 of the code unit 600 and/or the length Lᵢ of each second string 140 of the code unit 600 may form a pattern associated with information data. More specifically, and according to an example, a relatively short length Lᵢ of one or more second string(s) 140 may be associated with the value 0. Analogously, a medium length Lᵢ of one or more second string(s) 140 may be associated with the value 1, whereas a relatively long length Lᵢ of one or more second string(s) 140 maybe associated with the value 2. Here, in this example of Fig. 2b, the length L₁ of the primary second string 140 elongates on either side of the first string 130 with a length of six grid squares, wherein one grid square constitutes the portion of the first string 130, resulting in a total length of 13 grid squares. Hence, the length L₁ of the primary second string 140 is symmetric with respect to the first string 130. Analogously, the length L₂ of the secondary second string 140 comprises one grid square of the portion of the first string 130, two grid squares on one side of the first string 130, and two grid squares on the other side of the first string 130, resulting in a total length of five grid squares. The length L₃ of the tertiary second string 140 is symmetric with respect to the first string 130, and analogously with the primary and secondary second string 140 elongates on either side of the first string 130 with a total length of nine grid squares. In this manner, the code unit 600 comprises lengths Lᵢ of the second strings 140 which define a pattern of the code unit 600. It will be appreciated that other lengths Lᵢ and/or other associations or codes are feasible, and that the above-mentioned example is provided for an increased understanding of the concept of the pattern associated with information data. Furthermore, in this particular example of the code unit 600, the information data comprises a first header 610 of four second strings 140, intermediate data 620 of five second strings 140, a checksum 625 of two second strings 140, and a second header 630 of three second strings 140. Hence, the pattern of the second strings 140 of printing material is associated with information data which comprises the first header 610, intermediate data 620, the checksum 625 and the second header 630. It should be noted that even though the first header 610, the intermediate data 620, the checksum and the second header 630 comprises four, five, two and three second strings 140, respectively, the number of second strings 140 which constitute one or more of these data units may be set arbitrarily.

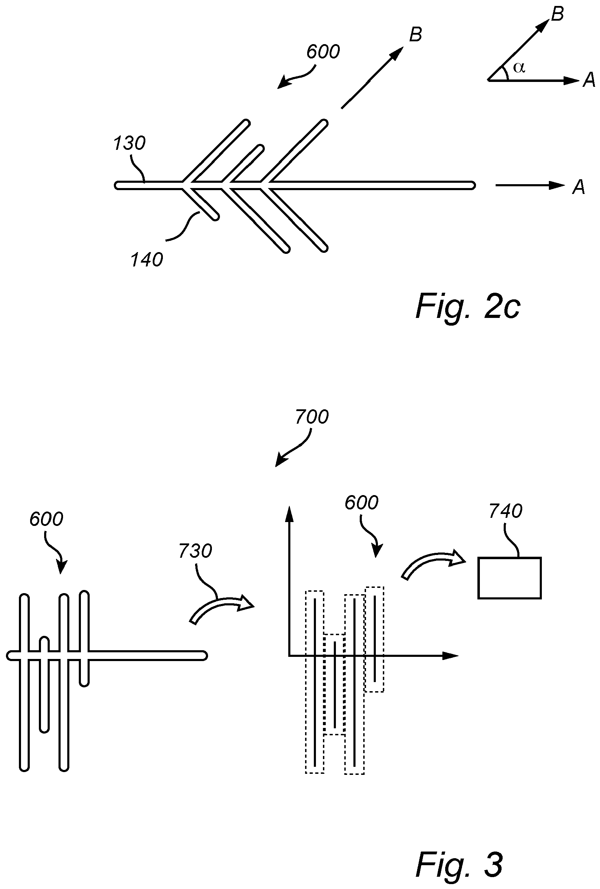

Fig. 2c shows yet another examples of a code unit 600 according to the third aspect of the present invention. The code unit 600 in Fig. 3c comprises second strings 140 extending from the first string 130 from both sides of the first string 130, wherein the second strings extend from the first string 120 along a second axis, B, arranged at an angle, α, with respect to the first axis. Here, α is exemplified as approximately 60°, but it should be noted that α may be substantially any angle in the range 0-90°. The pattern of the second strings 140, wherein the pattern comprises the length(s) of the second strings 140 and/or the angle α of the second strings 140, may be associated with information data.

Fig. 3 is a schematic illustration of a method 700 according to the fourth aspect of the present invention for decoding a code unit 600 according to the second aspect of the present invention. The method 700 comprises the step of mapping 730 the pattern of the code unit 600 to a histogram 735. More specifically, the mapping 730 may comprise transferring or transmitting the pattern of the code unit 600 to a histogram 735, wherein the pattern comprises the distribution, length, etc., of the plurality of second strings of the code unit 600. It will be appreciated that the step of mapping 730 (the pattern of) the code unit 600 may comprise scanning of the code unit 600, wherein the scanning, for example, may be performed in any direction of the code unit 600 (e.g. from left to right, from right to left, etc.) Furthermore, the method 700 comprises the step of retrieving 740 the information data from the code unit based on characteristics of the histogram 735.

The person skilled in the art realizes that the present invention by no means is limited to the preferred embodiments described above. On the contrary, many modifications and variations are possible within the scope of the appended claims. For example, it will be appreciated that the figures are merely schematic views of printer units according to embodiments of the present invention. Hence, any elements/components of the printer unit 100 such as the nozzle 110 and/or of the code unit 600 such as the first string 120, lengths Lᵢ of the second strings 140, etc., may have different dimensions, shapes and/or sizes than those depicted and/or described. For example, any elements/components may be larger or smaller than what is exemplified in the figures.

## Claims

1. A printer unit (100) for a 3D-printing apparatus, comprising
a nozzle (110) arranged to deposit a printing material from the printer unit,
a control unit (120) coupled to the nozzle and configured to control the movement of the nozzle,
wherein the control unit is configured to
move the nozzle along a first axis, A, for deposition of a first string (130) of printing material along the first axis, and to
move the nozzle along a second axis, B, arranged at an angle, α, with respect to the first axis, for deposition of a plurality of second strings (140) of printing material extending from the first axis along the second axis, and to
control the length, L, of each second string of the plurality of second strings, wherein the pattern of the plurality of second strings is associated with information data.

2. The printer unit according to claim 1, wherein the control unit is further configured to move the nozzle along the second axis on either side of the first axis, for deposition of the plurality of second strings on either side of the first string.

3. The printer unit according to claim 1 or 2, wherein the angle, α, is 45-90°, preferably 60-90°, and most preferred 90°.

4. The printer unit according to any one of the preceding claims, wherein the length of each second string is associated with information data.

5. A method (500) for controlling a printer unit of a 3D-printing apparatus, wherein the printer unit comprises a nozzle (110) arranged to deposit a printing material from the printer unit, the method comprising the steps of:
moving the nozzle along a first axis, A, for deposition of a first string of printing material along the first axis,
moving the nozzle along a second axis, B, arranged at an angle, α, with respect to the first axis, for deposition of a plurality of second strings of printing material extending from the first axis along the second axis, and
controlling the length of each second string of the plurality of second strings, wherein the pattern of the plurality of second strings is associated with information data.

6. The method according to claim 5, further comprising the step of:
moving the nozzle along the second axis on either side of the first axis, for deposition of the plurality of second strings on either side of the first string.

7. A code unit (600) obtainable by the method according to claim 5 or 6, comprising
a first string (130) of printing material extending along a first axis, A,
a plurality of second strings (140) of printing material formed in one piece with the first string, wherein each of the second strings extends with an individual length, Lᵢ, from the first string along a second axis, B, arranged at an angle, α, with respect to the first axis,
wherein the pattern of the plurality of second strings is associated with information data.

8. The code unit according to claim 7, wherein the plurality of second strings are arranged on either side of the first string.

9. The code unit according to claim 7 or 8, wherein the angle, α, is 45-90°, preferably 60-90°, and most preferred 90°.

10. The code unit according to any one of claims 7-9, wherein the length of each second string is associated with information data.

11. The code unit according to any one of claims 7-10, wherein the information data at least comprises a first header (610), intermediate data (620), and a second header (630).

12. A 3D-printed object comprising at least one code unit according to any one of claims 7-11.

13. A method (700) for decoding a code unit according to any one of claims 7-11, comprising the steps of:
mapping (730) the pattern of the plurality of second strings to a histogram, and
retrieving (740) the information data from the code unit based on characteristics of the histogram.

14. The method of claim 13 for decoding a code unit according to claim 11, wherein the step of retrieving the information data further comprises scanning the code unit in a direction of the code unit from either one of a direction
from the first header to the second header of the code unit, or
from the second header to the first header of the code unit.

15. A computer program comprising computer readable code for causing a computer to carry out the steps of the method according to any one of claims 5-6 or 13-14 when the computer program is carried out on the computer.
